# EUROPEAN PATENT APPLICATION

(11) **EP 2 887 091 A2**
(43) Date of publication of application: **24.06.2015**
(21) Application number: 14194695.4
(22) Date of filing: 25.11.2014
(51) Int. Cl.: G01S 7/04, B60Q 9/00, G01S 13/93

(54) **Vehicle blind spot detecting system**

(30) Priority: 29.11.2013 TW 102143873
(71) Applicant: Hon Hai Precision Industry Co., Ltd., New Taipei City (TW)
(72) Inventor: Lee, Chia-Yen, New Taipei (TW)
(74) Representative: Stuttard, Garry Philip

(57) **Abstract**

A blind spot detecting system for a vehicle includes an indicating module, a blind spot detecting module, and a controlling module. The indicating module includes at least one motor that is electronically coupled to the blind spot detecting module. The blind spot detecting module is configured to detect a presence or impending presence of an object in a side lane next to the vehicle, and generate a detecting signal in response to detecting the presence or impending presence of the object. The controlling module is electronically coupled to the blind spot detecting module, and configured to control the blind spot detecting module to output the detecting signal to activate the at least one motor to vibrate.

## Description

### CROSS-REFERENCE TO RELATED APPLICATIONS

This application claims priority to Taiwanese Patent Application No. 102143873 filed on November 29, 2013 in the Taiwan Intellectual Property Office, the contents of which are incorporated by reference herein.

### FIELD

The subject matter herein generally relates to side view detect devices, and particularly to a vehicle blind spot detecting system.

### BACKGROUND

Blind spots are well known to drivers of vehicles and typically occur on either side of the vehicle, approximately starting at the driver and extending backwards toward the rear of the vehicle. During the process of operating a motor vehicle, it is necessary for the driver to learn the proximity of various dangerous objects and their relative velocities for the driver to make sound driving decisions, such as whether or not there is enough time to change lanes. This information should be obtained from the vehicle's surrounding area. In order to obtain this information, the operator is frequently required to physically turn his or her head to check for occupancy of the blind spots. In taking such an action, the attention of the driver is momentarily diverted from control of the vehicle.

### SUMMARY

A blind spot detecting system for a vehicle includes an indicating module, a blind spot detecting module, and a controlling module. The indicating module includes at least one motor that is electronically coupled to the blind spot detecting module. The blind spot detecting module is configured to detect a presence or impending presence of an object in a side lane next to the vehicle, and generate a detecting signal in response to detecting the presence or impending presence of the object. The controlling module is electronically coupled to the blind spot detecting module, and configured to control the blind spot detecting module to output the detecting signal to activate the at least one motor to vibrate.

### BRIEF DESCRIPTION OF THE DRAWINGS

Implementations of the present disclosure will now be described, by way of example only, with reference to the attached figures.
FIG. 1 is a block diagram of one embodiment of a blind spot detecting system for a vehicle.
FIG. 2 is a diagrammatic view of a vehicle employing the blind spot detecting system as shown in FIG 1.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "comprising" when utilized, means "including, but not necessarily limited to"; it specifically indicates open-ended inclusion or membership in the so-described combination, group, series and the like.

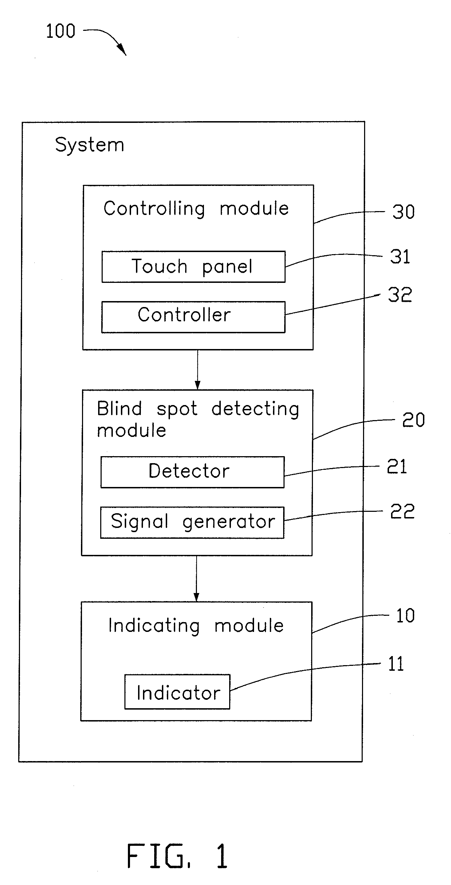

FIG. 1 illustrates a block diagram of one embodiment of a blind spot detecting system 100 for a vehicle that includes an indicating module 10, a blind spot detecting module 20, and a controlling module 30. The indicating module 10 includes at least one indicator 11 that is electronically coupled to the blind spot detecting module 20. The blind spot detecting module 20 is configured to detect a presence or impending presence of object in a side lane next to the vehicle, and generate a detecting signal in response to detecting the presence or impending presence of the object. The controlling module 30 electronically coupled to the blind spot detecting module 20, and is configured to control the blind spot detecting module 20 to output the detecting signal to activate the at least one indicator 11.

The blind spot detecting module 20 includes a detector 21 and a signal generator 22. The detector 21 is configured to detect the presence or impending presence of the object in a side lane next to the vehicle. The signal generator 22 is configured to generate the detecting signal in response to detecting the presence or impending presence of the object. For example, the detector 21 detects the presence of an object (such as another vehicle) in the lane next to the host vehicle, where it may be difficult for the driver of the host vehicle to determine whether or not there is another vehicle adjacent to the host vehicle. In other words, the detector 21 can detect the presence or impending presence of the object outside the field of view of a side view mirror of the vehicle. The detector 21 is one of an imaging sensor, a radar sensor, an ultrasonic sensor and a sonar sensor.

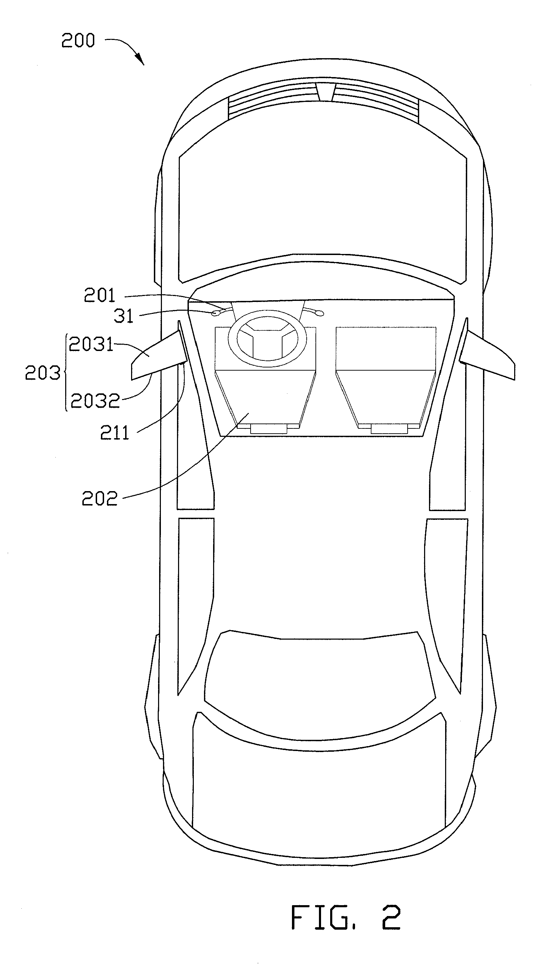

FIG. 2 illustrates a diagrammatic view of a vehicle 200 employing the blind spot detecting system 100 as shown in FIG. 1. The vehicle 200 includes a lever switch 201, a driver's seat 202, and a side view mirror 203. The controlling module 30 (see FIG. 1) includes a touch panel 31 mounted onto a surface of the lever switch 201 and a controller 32 (see FIG 1) electronically coupled to the touch panel 31. When an user, such as the driver of the vehicle 200, touches the touch panel 31, the controller 32 generates and outputs a controlling signal in response to a touch action detected by the touch panel 31. The control signal controls the signal generator 22 to output the detecting signal to activate the at least one indicator 11 (see FIG 1). The lever switch 201 can be a wiper lever switch or a turn signal lamp lever switch.

In at least one embodiment, one of the at least one detector 11 is a motor that is mounted into the lever switch 201. In another embodiment, one of the at least one detector 11 is a motor mounted into the driver's seat 202. For example, the indicating module 20 includes two motors, one of the two motors is mounted into the lever switch 201, and the other of the two motors is mounted into the driver's seat 202.

As shown in FIG 2, the side view mirror 203 includes a mirror casing 2031 and a reflecting element 2032. The detector 21 is mounted on the mirror casing 2031.

In use, when the driver of the vehicle 200 intends to change lanes, the driver can touch the touch panel 31 mounted on the lever switch 201, if another vehicle is in the lane adjacent to the vehicle 200 is detected by the blind spot detecting module 20, the controller 32 then controls the signal generator 22 to output the detecting signal to activate the motor 11 mounted on the lever switch 201, such that, the driver can determine whether a collision risk exists.

The embodiments shown and described above are only examples. Many details are often found in the art. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including the full extent established by the broad general meaning of the terms used in the claims. It will therefore be appreciated that the embodiments described above may be modified within the scope of the claims.

## Claims

1. A blind spot detecting system for a vehicle comprising:
an indicating module comprising at least one motor;
a blind spot detecting module electronically coupled to the at least one motor, configured to detect a presence or impending presence of an object in a side lane next to the vehicle and generate a detecting signal in response to detecting the presence or impending presence of the object; and
a controlling module electronically coupled to the blind spot detecting module, configured to control the blind spot detecting module to output the detecting signal to activate the at least one motor to vibrate.

2. The blind spot detecting system of claim 1, further comprising an on-vehicle lever switch, wherein the controlling module comprises a touch panel mounted onto a surface of the on-vehicle lever switch and a controller electronically coupled to the touch panel and the blind spot detecting module; when an user touches the touch panel, the controller controls the blind spot detecting module to output the detecting signal to activate the at least one motor to vibrate.

3. The blind spot detecting system of claim 2, wherein the on-vehicle lever switch is one of a wiper lever switch and a turn signal lamp lever switch.

4. The blind spot detecting system of any preceding claim, further comprising an on-vehicle lever switch, wherein one of the at least one motor is mounted into the on-vehicle lever switch.

5. The blind spot detecting system of any preceding claim, further comprising a driver's seat, wherein one of the at least one motor is mounted into the driver's seat.

6. The blind spot detecting system of any preceding claim, further comprising a side view mirror, wherein the blind spot detecting module comprises a detector and a signal generator; the detector is mounted onto the side view mirror, and configured to detect the presence or impending presence of the object in the side lane next to the vehicle, the signal generator is configured to generate the detecting signal in response to detecting the presence or impending presence of the object.

7. The blind spot detecting system of claim 6, wherein the detector is one of an imaging sensor, a radar sensor, an ultrasonic sensor and a sonar sensor.

8. A vehicle comprising:
a lever switch;
an indicating module comprising at least one indicator; and
a blind spot detecting module mounted electronically coupled to the at least one indicator, and configured to detect a presence or impending presence of an object in a side lane next to the vehicle, and generate a detecting signal in response to detecting the presence or impending presence of the object;
a controlling module mounted onto the lever switch and electronically coupled to the blind spot detecting module, and configured to control the blind spot detecting module to output the detecting signal to activate the at least one indicator.

9. The vehicle of claim 8, wherein the controlling module comprises a touch panel mounted onto a surface of the on-vehicle lever switch and a controller electronically coupled to the touch panel and the blind spot detecting module; when an user touches the touch panel, the controller controls the blind spot detecting module to output the detecting signal to activate the at least one indicator.

10. The vehicle of claim 8 or 9, wherein the lever switch is one of a wiper lever switch and a turn signal lamp lever switch.

11. The vehicle of claim 8, 9 or 10, wherein one of the at least one detector is a motor that is mounted into the on-vehicle lever switch.

12. The vehicle of claim 8, 9 or 10, further comprising a driver's seat, wherein one of the at least one detector is a motor mounted into the driver's seat.

13. The vehicle of claim 8, 9, 10, 11, 12 or 13, further comprising a side view mirror, wherein the blind spot detecting module comprises a detector and a signal generator; the detector is mounted onto the side view mirror, and configured to detect the presence or impending presence of the object in the side lane next to the vehicle, the signal generator is configured to generate the detecting signal in response to detecting the presence or impending presence of the object; the detector is one of an imaging sensor, a radar sensor, an ultrasonic sensor and a sonar sensor.
